# EUROPEAN PATENT SPECIFICATION

(11) **EP 4 053 186 B1**
(45) Date of publication and mention of the grant of the patent: **25.10.2023**
(21) Application number: 21305247.5
(22) Date of filing: 01.03.2021
(51) Int. Cl.: C08G 65/336, G02B 1/18, C08G 65/26

(54) **ARTICLE HAVING A SURFACE DISPLAYING ANTIMICROBIAL AND ANTIFOG PROPERTIES**
ARTIKEL MIT EINER OBERFLÄCHE, DIE ANTIMIKROBIELLE UND BESCHLAGHEMMENDE EIGENSCHAFTEN AUFWEIST
ARTICLE DOTÉ D'UNE SURFACE AFFICHANT DES PROPRIÉTÉS ANTIMICROBIENNES ET ANTIBUÉE

(43) Date of publication of application: 07.09.2022
(73) Proprietor: Essilor International, 94220 Charenton-le-Pont (FR)
(72) Inventor: BARRAU, Coralie, 94220 Charenton-le-Pont (FR); CADET, Mamonjy, 94220 Charenton-le-Pont (FR); KUDLA, Amélie, 94220 Charenton-le-Pont (FR)
(74) Representative: Jacobacci Coralis Harle

(56) References cited:
- US-A1- 2016 249 608
- US-B2- 9 645 285

## Description

The present invention relates to the use of specific organosilane compounds for limiting the development of microbes and/or eliminating microbes such as bacteria on a main surface of a substrate, typically an optical article such as an optical lens. At the same time, the substrate can exhibit antifog properties.

Very numerous supports, such as plastic materials and glass, suffer as a drawback from becoming covered with fog when their surface temperature decreases below the dew point of ambient air. This is especially the case with the mineral or organic glass that is used to make glazing for transportation vehicles or buildings, lenses, especially for spectacles, mirrors, and so on. The fogging that develops on these surfaces leads to a decrease in transparency, due to the diffusion of light through water drops, which may cause an alteration of vision.

To prevent any fog formation in very damp environments, that is to say the condensation of very little water droplets on a support, it has been suggested to apply hydrophilic coatings onto the outer surface of such support, with a low static contact angle with water, preferably of less than 10°, more preferably of less than 5°.

Antifogging properties may be obtained by applying a temporary hydrophilic solution onto the surface of an antifog coating precursor coating.

The patent application WO 2011/080472 describes a spectacle lens comprising a substrate provided with a coating comprising silanol groups on the surface thereof and, directly contacting this coating, an antifog coating precursor coating, wherein the antifog coating precursor coating:
- is obtained through the grafting of at least one organosilane compound possessing:
   - a polyoxyalkylene group comprising less than 80 carbon atoms, and
   - at least one silicon atom carrying at least one hydrolyzable group,
- has a thickness lower than or equal to 5 nm,
- has a static contact angle with water of more than 10° and of less than 50°.

The surfactant solution which is preferably deposited to provide this surface with temporary antifogging properties is the commercially available solution Optifog^{™} activator. Preferred surfactants have a structure comprising poly(oxyalkylene) groups.

The antifogging properties, especially the durability of the antifogging effect associated with the lens precursor coating described in the patent application WO 2011/080472, are very satisfactory. Typically, the antifogging effect is observed on the lens surface for about 7 days after applying the surfactant composition.

The COVID-19 pandemic has exacerbated a combined need of being protected while limiting fog on lenses due to the mask wearing. Environmental surfaces are recognized as a vector for transmission of microorganisms. In that way, eyeglasses may turn into fomites and be a vector of bacteria spreading, as they are regularly touched and put on various surfaces.

For example, microbes residing behind the wearer's ear can be transferred to the eyeglass frame. Upon putting or removing the eyeglasses, the microbes then are transferred to the wearer's hand, and then from hand to eye, mouth, nose, or the like. Contact with the wearer's hands also facilitates the deposition of microbes onto the glasses frame. Similarly, safety glasses in a commercial facility can be contaminated by a first wearer, and the microbes subsequently transferred to a second wearer.

The attention has been especially devoted to the use of nanoparticle-based materials as antimicrobial agents for preventing microbial communication.

WO 2020/138469 discloses a spectacle lens in which high antimicrobial performance and antistatic performance are achieved simultaneously in the same film on a lens surface. Said film contains tungsten oxide particles, tin oxide particles, and silver particles. The tungsten oxide particles and silver particles provide the antimicrobial function, while the tin oxide particles provide the antistatic function.

US 9663401 discloses an optical coating structure, comprising a substrate, an antireflective coating, an antibacterial coating layer a protective coating layer covering the antibacterial coating layer, and at least one of a super-hydrophobic coating layer and an anti-fingerprint coating layer. The antibacterial coating layer may include silver based materials or zinc oxide (ZnO) based materials such as zinc ion or silver ion.

JP 2018-159860 discloses an optical product having a dielectric multilayer film displaying an antireflection function, which includes a dielectric layer containing metal ion supported zeolite (aluminosilicate) as an antibacterial agent. The metal ion can be silver ion, copper ion or copper-zinc ion.

CN 104073030 relates to an optical product having a multilayer film including a 5-20 nm thick anti-microbial layer based on zinc oxide and/or calcium oxide.

CN 106772713 discloses a lens coated with an antireflection film and a 1-100 nm thick antimicrobial layer made of one or more metal oxides of silver, copper, zinc and titanium.

US 2007/195259 discloses a lens having an antimicrobial agent incorporated into the lens material or into a coating material deposited onto the lens. The antimicrobial agent can be organic, such as 2,4,4'-trichloro-2'-hydroxydiphenyl ether or polyhexamethylene biguanide hydrochloride, or inorganic, such as titanium dioxide, barium metaborate, a silver compound, a zinc compound, and a copper compound. Silver, copper and zinc can also be used in various forms, such as elemental, ion, zeolite, sol/gel, or amorphous glass powder.

US 6013372 discloses a substrate coated with an abrasion-resistant photocatalytic coating comprised of a semiconductor photocatalyst, in order to exhibit a high degree of antifogging function. The photocatalytic coating may be doped with a metal such as Ag, Cu and Zn as an anti-bacterial enhancer, using a soluble salt of such metal. US2016/249608A1 discloses a antimicrobial composition for preparing aqueous solution, dry microfiber tissue, nonwoven wet tissue, and optical article, comprising non-ionic surfactant comprising hydrophilic unit and hydrophobic unit, and alcohol compound.

There is still a need to provide a surface having both antimicrobial and antifogging properties.

The surface should enable to reduce, inhibit or delay the growth of microorganisms, such as bacteria or yeast, or alternatively kill or destroy such microorganisms.

It is another objective of the present invention to provide an antifog coating that exhibits satisfactory durability of the antifogging property over time and/or under mechanical stresses, while preserving an acceptable ease of soil removal. The coating should not affect the transparency of the article onto which it is formed.

Surprisingly, it has been found by the inventors that specfic organic compounds could be grafted to surfaces and impart an antimicrobial character to the finished article.

Thus, the present invention relates to the use of a compound B for limiting the development of microbes and/or eliminating microbes on a main surface of a substrate, wherein compound B is an organosilane compound grafted on the surface of said substrate, the grafting of which forms a coating C on said substrate, and compound B comprises a polyoxyalkylene group and at least one silicon atom bearing at least one hydrolyzable group.

In the present application, a coating that is "on" a substrate/coating or which has been deposited "onto" a substrate/coating is defined as a coating that (i) is positioned above the substrate/coating, (ii) is not necessarily in contact with the substrate/coating, that is to say one or more intermediate coatings may be arranged between the substrate/coating and the coating in question (however, it is preferably in contact with said substrate/coating), and (iii) does not necessarily completely cover the substrate/coating. When "a layer 1 is arranged under a layer 2", it is intended to mean that layer 2 is more distant from the substrate than layer 1.

As used herein, an "antifog coating" is intended to mean a coating which, when a transparent lens substrate coated with such coating is placed under conditions generating fog onto said substrate being devoid of said coating, enables to immediately attain a visual acuity > 6/10 for an observer looking through a coated lens at a visual acuity scale located at a distance of 5 meters. Several tests to evaluate the antifogging properties of a coating are described in the experimental section. Under fog generating conditions, antifog coatings may either not present fog on their surface (ideally no visual distortion, or visual distortion but visual acuity > 6/10 under the hereabove mentioned measurement conditions), or may present some fog on their surface but yet enable, despite the vision perturbation resulting from fog, a visual acuity > 6/10 under the hereabove mentioned measurement conditions. A non-antifog coating does not allow a visual acuity > 6/10 as long as it is exposed to conditions generating fog and generally presents a condensation haze under the hereabove mentioned measurement conditions.

As used herein, an "antifog optical article" is intended to mean an optical article provided with an "antifog coating" such as defined hereabove.

Thus, the antifog coating precursor according to the invention, which is a hydrophilic coating, is not considered as being an antifog coating according to the present invention, even if it has some antifogging properties. Indeed, this antifog coating precursor does not allow to obtain a visual acuity > 6/10 under the hereabove mentioned measurement conditions.

As used herein, a temporary antifog coating is intended to mean an antifog coating obtained after having applied onto the surface of the precursor coating of said antifog coating a surfactant film containing at least one surfactant.

The durability of a temporary antifog coating is generally limited by the wiping operations performed on its surface, the surfactant molecules being not permanently attached to the surface of the coating but just adsorbed for a more or less durable period of time.

As used herein, the term "antimicrobial" is used to encompass materials that retard the growth of microbes, prevent the accumulation of microbes to a statistically significant degree or even kill microbes. An antimicrobial material has an activity against microbes such as bacteria, and/or yeast and/or molds and/or viruses. In particular, this includes biocide, bacteriostatic, antibacterial, bactericide, yeasticidal and/or repellent activity.

The article prepared according to the invention comprises a substrate, preferably transparent, having generally front and rear main surfaces, at least one of said main surfaces being optionally coated with a first coating preferably comprising silanol groups at its surface. As used herein, the rear face (generally concave) of the substrate is intended to mean the face which, when using the article, is the nearest from the wearer's eye. On the contrary, the front face (generally convex) of the substrate, is the face which, when using the article, is the most distant from the wearer's eye.

Although the article according to the invention may be any optical article that may encounter a problem of microbe development and/or fog formation, such as a screen, a glazing for the automotive industry or the building industry, or a mirror, it is preferably an optical lens, more preferably an ophthalmic lens, for spectacles, or a blank for optical or ophthalmic lenses, having a substrate onto which coating C is formed. Compound B according to the invention is an organosilane compound grafted on the surface of said substrate, the grafting of which forms a coating C on said substrate.

The article of the invention is preferably transparent. As used herein, a "transparent" optical article is an optical article having a relative light transmission factor in the visible spectrum, Tᵥ, higher than 90%, preferably higher than 91%, more preferably higher than 92%, even more preferably higher than 97.5%, even better higher than 98%. The Tᵥ factor is such as defined in the standard NF EN 1836 and corresponds to the 380-780 nm wavelength range.

According to the invention, the outer surface of the first coating preferably comprises silanol groups. Coating C may be formed on at least one of the main surfaces of a bare substrate, that is to say a non-coated substrate, or on at least one of the main surfaces of a substrate that has already been coated with one or more functional coatings, the first coating being the outer coating of which. In other words, the main surface of the substrate may comprise a first coating onto which said compound B is directly grafted.

The substrate for the article according to the invention may be a mineral or organic glass, for example of a thermoplastic or thermosetting plastic material.

Especially preferred classes of substrates include poly(thiourethanes), polyepisulfides and resins resulting from the polymerization or (co)polymerization of alkyleneglycol bis allyl carbonates. These are sold, for example, under the trade name CR-39^{®} by the PPG Industries company (ORMA^{®} lenses, from ESSILOR).

In some applications, it is preferred that the substrate's main surface be coated with one or more functional coatings prior to depositing coating C. These functional coatings traditionally used in optics may be, without limitation, an impact-resistant primer layer, an abrasion-resistant and/or a scratch-resistant coating, a polarized coating, a photochromic coating, a tinted coating or an interferential coating, particularly an impact-resistant primer layer coated with an abrasion-resistant and/or a scratch-resistant layer.

In one embodiment, the first coating onto which said compound B is directly grafted is chosen from those compounds, for example an interferential coating, preferably an antireflection coating, an abrasion-resistant and/or scratch-resistant coating or a silica-based layer deposited onto an abrasion-resistant and/or scratch-resistant coating.

An interferential coating, preferably an antireflection coating, is preferably deposited onto an abrasion-resistant and/or a scratch-resistant coating. The abrasion-resistant coating and/or the scratch-resistant coating may be any layer traditionally used as an abrasion-resistant coating and/or scratch-resistant coating in the ophthalmic lenses field.

The abrasion-resistant and/or scratch-resistant coatings are preferably hard coatings based on poly(meth)acrylates or silanes comprising generally one or more mineral fillers that are intended to improve the hardness and/or the refractive index of the coating once cured. As used herein, a (meth)acrylate is an acrylate or a methacrylate.

The abrasion-resistant coating and/or scratch-resistant hard coatings are preferably made from compositions comprising at least one alkoxysilane and/or a hydrolyzate thereof, obtained for example through hydrolysis with a hydrochloric acid solution, and optionally condensation and/or curing catalysts and/or surfactants.

Recommended coatings of the present invention include coatings based on epoxysilane hydrolyzates such as those described in the patents EP 0614957, US 4,211,823 and US 5,015,523.

The thickness of the abrasion-resistant coating and/or scratch-resistant coating does generally vary from 2 to 10 µm, preferably from 3 to 5 µm.

Prior to depositing the abrasion-resistant coating and/or the scratch-resistant coating, it is possible to apply onto the substrate a primer coating to improve the impact resistance and/or the adhesion of the subsequent layers in the final product.

This coating may be any impact-resistant primer layer traditionally used for articles in a transparent polymer material, such as ophthalmic lenses.

Preferred primer compositions may be chosen from those described in WO2011/080472.

Preferred primer compositions are compositions based on polyurethanes and compositions based on latexes, particularly polyurethane type latexes and poly(meth)acrylic latexes, and their combinations. Primer layers generally have thicknesses, after curing, ranging from 0.2 to 2.5 µm, preferably ranging from 0.5 to 1.5 µm.

According to another embodiment of the invention, the article according to the invention comprises an interferential coating. When such a coating is present, it generally constitutes the first coating within the meaning of the invention.

The interferential coating may be virtually any interferential coating conventionally used in the field of optics, in particular ophthalmic optics. The interferential coating may be, in a non-limiting manner, an anti-reflection coating, a reflective (mirror) coating, an infrared filter or an ultraviolet filter, but is preferably an anti-reflection coating.

An anti-reflection coating is a coating, deposited on the surface of an article, which improves the anti-reflection properties of the final article. It reduces the reflection of light at the article/air interface over a relatively broad portion of the visible spectrum.

As is also well known, antireflective coatings conventionally comprise a single-layer or multilayer stack of dielectric materials. These are preferably multilayer coatings, comprising layers with a high refractive index (HI) and layers with a low refractive index (LI).

In the present patent application, a layer of the antireflective coating is said to be a layer with a high refractive index when its refractive index is greater than 1.55, preferably greater than or equal to 1.6, better still greater than or equal to 1.8 and even better still greater than or equal to 2.0. A layer of an antireflective coating is said to be a layer with a low refractive index when its refractive index is less than or equal to 1.55, preferably less than or equal to 1.50 and better still less than or equal to 1.45. Unless otherwise indicated, the refractive indices to which reference is made in the present invention are expressed at 25°C for a wavelength of 550 nm.

The HI and LI layers are respectively conventional layers with a high refractive index and with a low refractive index well known in the art, the composition, the thickness and the method of deposition of which are described in particular in patent application WO 2010/109154.

Preferably, the total thickness of the antireflective coating is less than 1 micrometer, better still less than or equal to 800 nm and even better still less than or equal to 500 nm. The total thickness of the antireflective coating is generally greater than 100 nm, preferably greater than 150 nm.

The luminous reflection factor of the optical article according to the invention, noted Rᵥ, is preferably of less than 2.5% per face of the article. The means to reach such Rᵥ values are well known from the person skilled in the art.

In the present application, the "luminous reflection factor" is such as defined in the ISO standard 13666:1998, and is measured according to ISO 8980-4 standard, that is to say it is the weighted average of the spectral reflectivity within all the visible spectrum wavelength range from 380 to 780 nm.

The antireflection coating is a monolayered or multilayered antireflective coating, the outer layer of which preferably has silanol groups on its surface. As used herein, the outer layer of a coating is intended to mean the layer of said coating that is the most distant from the substrate.

As used herein, a coating comprising silanol groups on the surface thereof is intended to mean a coating which naturally comprises silanol groups on the surface thereof or a coating which silanol groups have been created after having been submitted to a surface activation treatment, such as described e.g. in WO 2011/080472.

This coating is therefore a coating based on siloxanes or silica, for example, without limitation, a silica-based layer, a sol-gel coating based on organosilane species such as alkoxysilanes, or a coating based on silica colloids.

Said outer layer comprising silanol groups on the surface thereof is preferably a low refractive index layer based on silica (comprising silica), most preferably it consists in a silica-based layer (SiO₂), generally obtained through vapor phase deposition.

Said layer based on SiO₂ may comprise, in addition to silica, one or more other materials traditionally used for making thin layers, for example one or more materials selected from dielectric materials described in the present specification. This layer based on SiO₂ is preferably free of Al₂O₃.

The coating comprising silanol groups on the surface thereof preferably comprises at least 70% by weight of SiO₂, more preferably at least 80% by weight and even more preferably at least 90% by weight of SiO₂. As has already been noticed, in a most preferred embodiment, it comprises 100% by weight of silica.

The outer layer or the antireflection coating comprising silanol groups on the surface thereof may also be a sol-gel coating based on silanes such as alkoxysilanes, for example tetraethoxysilane or organosilanes such as γ-glycidoxypropyl trimethoxysilane. Such a coating is obtained through wet deposition, by using a liquid composition comprising a hydrolyzate of silanes and optionally colloidal materials with a high (> 1.55, preferably > 1.60, more preferably > to 1.70) or a low (≤ 1.55) refractive index. Such a coating which layers comprise an organic/inorganic hybrid matrix based on silanes wherein colloidal materials are dispersed to adjust the refractive index of each layer are described for example in the patent FR 2858420.

Prior to forming the antifog coating precursor on the antireflection coating, it is usual to submit the surface of such coating to a physical or chemical activation treatment intended to reinforce the adhesion of the antifog coating precursor. These treatments may be selected from those described for the same purpose in WO 2011/080472.

According to the invention, the first coating, when present, is directly in contact with coating C having antimicrobial properties. Said coating C is also a precursor coating of an antifog coating.

As used herein, "a precursor of an antifog coating" is intended to mean a coating which, if a surfactant film is applied on the surface thereof, forms an antifog coating within the meaning of the invention. The system precursor coating + surfactant-based film represents the antifog coating as such.

The antifog coating precursor coating (coating C) is a coating having a thickness preferably lower than or equal to 5 nm, preferably of 4 nm or less, more preferably of 3 nm or less and even more preferably of 2 nm or less, possessing preferably a static contact angle with water of more than 10° and of less than 50°, which is obtained through a permanent grafting of at least one compound bearing a polyoxyalkylene group, identified as compound B.

Said compound bearing a polyoxyalkylene group generally has at least one group capable of establishing a covalent bond with a functional group present on the outer surface of the antireflection coating onto which it must be grafted, preferably at least one silicon atom bearing at least one hydrolyzable group such as a silanol group. This reactive group can be, without limitation, one of the following groups: an isocyanate, acrylate, methacrylate, halogenoalkyl, carboxylic or sulfonic acid, acyl chloride, chlorosulfonyl, chloroformiate, ester, a silicon atom bearing at least one hydrolyzable group, or a group containing an epoxy function such as the glycidyl group.

The compound bearing a polyoxyalkylene group is preferably an organosilane compound possessing a polyoxyalkylene group and at least one silicon atom bearing at least one hydrolyzable group.

In one embodiment of the invention, the antifog coating precursor coating is deposited by applying a composition comprising a hydrolyzate of the organosilane compound possessing a polyoxyalkylene group and at least one silicon atom carrying at least one hydrolyzable group.

It is recommended to avoid any condensation of the hydrolyzed organosilane compounds so that they can keep as much as possible the silanol functions free to react so as to facilitate the grafting of these compounds onto the surface of the optical article and to limit the formation of siloxane prepolymers before grafting. That is the reason why the deposited organosilane compound thickness is so thin.

It is therefore recommended to apply the composition relatively quickly after the hydrolysis, typically within less than 2 hours, preferably less than 1 hour, more preferably less than 30 minutes after having performed the hydrolysis (by adding a typically HCl-based, acidic aqueous solution).

Most preferably, the composition is applied less than 10 minutes, even more preferably less than 5 minutes and preferably less than 1 minute after having performed the hydrolysis.

It is preferred to conduct the hydrolysis without supplying heat, i.e., typically at a temperature of from 20 to 25°C.

Generally, the deposition of few nanometer-thick layers requires to use very diluted compositions, with a very low dry matter content, which slows down the condensation kinetics.

The compound bearing a polyoxyalkylene group used, preferably an organosilane compound, is capable, thanks to its reactive group, preferably a silicon-containing reactive group, to establish a covalent bond with groups such as silanol groups that may be present on the surface of the coating onto which it is deposited.

In the preferred embodiment, the organosilane compound of the invention comprises a polyoxyalkylene chain functionalized at only one end or at both ends thereof, preferably at only one end, by a group comprising at least one silicon atom carrying at least one hydrolyzable group. This organosilane compound comprises preferably a silicon atom carrying at least two hydrolyzable groups, preferably three hydrolyzable groups. Preferably, it does not comprise any urethane group. It is preferably a compound of formula:

R¹¹Y'ₘSi(X)₃₋ₘ (I)

wherein the Y' groups, being the same or different, are monovalent organic groups bound to the silicon atom through a carbon atom, the groups X, being the same or different, are hydrolyzable groups, R¹¹ is a group comprising a polyoxyalkylene function, m is an integer equal to 0, 1 or 2. Preferably m = 0.

The X groups are preferably selected from alkoxy groups -O-R³, particularly C₁-C₄ alkoxy groups, acyloxy groups -O-C(O)R⁴ where R⁴ is an alkyl radical, preferably a C₁-C₆ alkyl radical, preferably a methyl or an ethyl, halogens such as C!, Br and I or trimethylsilyloxy (CH₃)₃SiO-, and combinations of these groups. Preferably, the X groups are alkoxy groups, and particularly methoxy or ethoxy groups, and more preferably ethoxy groups.

The Y' group, present when m is not zero, is preferably a saturated or unsaturated hydrocarbon group, preferably a C₁-C₁₀ and more preferably a C₁-C₄ group, for example an alkyl group, such as a methyl or an ethyl group, a vinyl group, an aryl group, for example an optionally substituted phenyl group, especially substituted by one or more C₁-C₄ alkyl groups. Preferably Y' represents a methyl group.

In a preferred embodiment, the compound of formula I comprises a trialkoxysilyl group such as a triethoxysilyl or a trimethoxysilyl group.

The polyoxyalkylene group of the organosilane compound (group R¹¹) comprises preferably less than 80 carbon atoms, more preferably less than 60 carbon atoms, and even more preferably less than 50 carbon atoms. Most preferably, the polyoxyalkylene group comprises less than 40 carbon atoms and more preferably less than 30 carbon atoms. The most preferred compounds have a polyoxyalkylene group which comprise from 5 to 20 carbon atoms. The R¹¹ group preferably satisfies the same conditions.

The R¹¹ group corresponds generally to the formula -L-R² where L is a divalent group bound to the silicon atom of the compounds of formula I through a carbon atom, and R² is a group comprising a polyoxyalkylene group bound to the group L through an oxygen atom, this oxygen atom being included in the group R². Non limiting examples of L groups include linear or branched, optionally substituted alkylene, cycloalkylene, arylene, carbonyl, amido groups, or combinations of these groups like cycloalkylenealkylene, biscycloalkylene, biscycloalkylenealkylene, arylenealkylene, bisphenylene, bisphenylenealkylene, amido alkylene groups, amongst which for example the group CONH(CH₂)₃, or -OCH₂CH(OH)CH₂- and - NHC(O)- groups. Preferred L groups are alkyl groups (preferably linear), having preferably 10 carbon atoms or less, more preferably 5 carbon atoms or less, for example ethylene and propylene groups.

Preferred R² groups comprise a polyoxyethylene group -(CH₂CH₂O)ₙ-, a polyoxypropylene group, or combinations of these groups.

The preferred organosilanes of formula I are compounds of following formula II:

Y'ₘ(X)₃₋ₘSi(CH₂)_{n'}-(L')_{m'}-(OR)ₙ-O-(L")_{m"}-R‴ (II)

where R‴ is a hydrogen atom, a linear or branched acyl or alkyl group, optionally substituted by one or more functional groups, and which may furthermore comprise one or more double bonds, R is a linear or branched alkyl group, preferably linear, for example an ethylene or a propylene group, L' and L" are divalent groups, X, Y' and m are such as defined hereabove, n' is an integer ranging from 1 to 10, preferably from 1 to 5, n is an integer ranging from 2 to 50, preferably from 5 to 30, more preferably from 5 to 15, m' is 0 or 1, preferably 0, m" is 0 or 1, preferably 0.

The groups L' and L", when present, may be selected from divalent groups L previously described and represent preferably the group -OCH₂CH(OH)CH₂- or the group -NHC(O)-. In this case, the groups -OCH₂CH(OH)CH₂- or -NHC(O)- are linked to the adjacent groups (CH₂)_{n'} (with a group L') and R‴ (with a group L") through their oxygen atom (for the group - OCH₂CH(OH)CH₂-) or through their nitrogen atom (for the group -NHC(O)-).

In one embodiment, m = 0 and the hydrolyzable groups X represent methoxy or ethoxy groups. n' is preferably 3. In another embodiment, R‴ represents an alkyl group possessing less than 5 carbon atoms, preferably a methyl group. R‴ may also represent an aliphatic or aromatic acyl group, especially an acetyl group.

Lastly, R‴ may represent a trialkoxysilylalkylene group or a trihalogenosilylalkylene group such as a group -(CH₂)_{n"}Si(R⁵)₃ where R⁵ is a hydrolyzable group such as the previously defined X groups and n" is an integer such as the previously defined n' integer. An example of such a R‴ group is the group -(CH₂)₃Si(OC₂H₅)₃. In this embodiment, the organosilane compound comprises two silicon atoms carrying at least one hydrolyzable group.

In preferred embodiments, n is 3, or does range from 6 to 9, from 9 to 12, from 21 to 24, or from 25 to 30, preferably from 6 to 9.

To be mentioned as suitable compounds of formula II are for example 2-[methoxy(polyethyleneoxy)propyl]trimethoxysilane compounds of formulas CH₃O-(CH₂CH₂O)₆₋₉-(CH₂)₃Si(OCH₃)₃ (III) and CH₃O-(CH₂CH₂O)₉₋₁₂-(CH₂)₃Si(OCH₃)₃ (IV), marketed by Gelest, Inc. or ABCR, the compound of formula CH₃O-(CH₂CH₂O)₃-(CH₂)₃Si(OCH₃)₃ (VIII), compounds of formula CH₃O-(CH₂CH₂O)ₙ-(CH₂)₃Si(OC₂H₅)₃ where n= 21-24, 2-[methoxy(polyethyleneoxy)propyl] trichlorosilane, 2-[acetoxy(polyethyleneoxy)propyl] trimethoxysilane, 2-[acetoxy(polyethyleneoxy)propyl] triethoxysilane 2-[hydroxy(polyethyleneoxy)propyl] trimethoxysilane, 2-[hydroxy(polyethyleneoxy)propyl] triethoxysilane, compounds of formulas HO-(CH₂CH₂O)₈₋₁₂-(CH₂)₃Si(OCH₃)₃ and HO-(CH₂CH₂O)₈₋₁₂-(CH₂)₃Si(OC₂H₅)₃, polypropylene-bis[(3-methyldimethoxysilyl)propyl] oxide, and compounds with two siloxane heads such as those of formulae (V), (VI) and (VII) disclosed in WO 2011/080472.

Preferred compounds of formula II are [alkoxy(polyalkylenoxy)alkyl]trialkoxysilanes or their trihalogenated analogues (m = m' = m" = 0, R‴ = alkoxy).

Preferably, the compound bearing a polyoxyalkylene group of the invention has no fluorine atom. Typically, the fluorine weight ratio towards the antifog coating precursor coating is of less than 5%, preferably of less than 1% by weight and more preferably of 0%.

Preferably, the molecular weight of the compound bearing a polyoxyalkylene group according to the invention ranges from 400 to 4000 g/mol, preferably from 400 to 1500 g/mol, more preferably from 400 to 1200 g/mol, and even more preferably from 400 to 1000 g/mol.

Of course it is possible to graft a mixture of compounds of formula I or II, for example a mixture of compounds with different polyoxyalkylene RO chain lengths.

In one embodiment of the invention, the antifog coating precursor comprises more than 80% by weight of a compound bearing a polyoxyalkylene group according to the invention, relative to the antifog coating precursor total weight, preferably more than 90%, more preferably more than 95% and most preferably more than 98%. In one embodiment, the antifog coating precursor consists in a layer of said compound bearing a polyoxyalkylene group, preferably an organosilane compound.

Preferably, the antifog coating precursor coating of the invention comprises less than 5% by weight of a metal oxide or metalloid oxide (for example silica or alumina) relative to the coating total weight, more preferably it is free of any. When the organosilane compound used for making the antifog coating is deposited under vacuum, preferably no metal oxide is co-evaporated, according to the coevaporation method of at least one organic compound and at least one inorganic compound described in the application EP 1324078.

Preferably, the antifog coating precursor coating does not comprise any crosslinking agent, which means that it is preferably not formed from a composition comprising a crosslinking agent, for example tetraethoxysilane.

The antifog coating precursor coating of the invention (coating C) has preferably a static contact angle with water of more than 10° and of less than 50°, preferably lower than or equal to 45°, more preferably ≤ 40°, even more preferably ≤ 30° and most preferably ≤ 25°. This contact angle does preferably range from 15° to 40°, more preferably from 20° to 30°.

The deposition of the at least one compound bearing a polyoxyalkylene group onto the surface of the antireflection coating may be carried out according to usual procedures, preferably by gas phase deposition or liquid phase deposition, most preferably in the gas phase, by vacuum evaporation.

When the grafting is carried out in gas phase, for example by evaporation under vacuum, it may be followed, if needed, with a step for removing the excess of the deposited compound B bearing a polyoxyalkylene group so as to retain only the compound bearing a polyoxyalkylene group that is really grafted onto the surface of the antireflection coating. Non grafted molecules are thus removed. Such a removal step should be preferably performed when the thickness of the antifog coating precursor initially deposited is higher than 5 nm.

However, this step of removing the compound bearing a polyoxyalkylene group in excess can be omitted in some cases, seeing that it is possible to deposit the organosilane compound so as to form a grafted layer, that is to say once it is ensured that the deposited thickness does not exceed a few nanometers. Adjusting the deposition parameters for obtaining such thicknesses belongs to the ordinary competence of any person skilled in the art.

Nevertheless, it is preferred to form the antifog coating precursor coating by depositing some compound bearing a polyoxyalkylene group in excess onto the surface of the antireflection coating and thereafter removing the excess of this deposited but not grafted compound. Indeed, the inventors observed that when a layer of grafted compound bearing a polyoxyalkylene group is directly formed with a thickness lower than or equal to 5 nm, which does not require any removal of compound bearing a polyoxyalkylene group in excess, it is sometimes possible to obtain a precursor coating of an antifog coating, the surface of which has not a sufficient affinity towards a liquid solution comprising at least one surfactant, which would lead to a coating not having the desired antifogging properties.

Surprisingly, this is not observed when the compound B bearing a polyoxyalkylene group is deposited in excess, as previously indicated, and such excess is removed later on. The actual physical thickness of the layer of compound bearing a polyoxyalkylene group deposited in excess is preferably lower than or equal to 20 nm.

Removing the compound bearing a polyoxyalkylene group deposited in excess may be performed by rinsing (wet process) using for example a soapy water-based solution and/or by wiping (dry process). Preferably, the removal step comprises a rinsing operation followed with a wiping operation.

Preferably, the rinsing operation is performed by cleaning the article with some soapy water (comprising a surfactant) using a sponge. Thereafter a rinsing operation is performed with deionized water, and optionally, the lens is thereafter submitted to a wiping operation for typically less than 20 seconds, preferably 5 to 20 seconds, by means of a CEMOI^{™} or Selvith^{™} cloth impregnated with alcohol, typically isopropyl alcohol. Another rinsing operation with deionized water may then be repeated, then a wiping operation with a wiping cloth. All these steps may be carried out manually or be partially or fully automated.

The step of removing the compound bearing a polyoxyalkylene group in excess leads to a layer of this compound having generally and preferably a thickness of 5 nm or less. In this case, the compound deposited onto the surface of the optical article forms a monomolecular or a quasi-monomolecular layer.

The compound bearing a polyoxyalkylene group may be beforehand dissolved in a solvent prior to being evaporated, for better controlling the evaporation rate and the deposition rate. The thickness of the film may be controlled in this way thanks to this dissolution and by adjusting the amount of solution to be evaporated.

When the grafting is carried out using a wet process, for example by dipping or spin-coating, it is generally not necessary to perform a step for removing the compound bearing a polyoxyalkylene group deposited in excess.

The antifog coating precursor coating according to the invention has a low roughness. Typically, for an organosilane compound deposited by vapor phase, the roughness mean value Ra is lower than 2 nm, typically of about 1 nm. Ra is such as defined in WO 2011/080472.

A temporary antifog coating according to the invention can be obtained by depositing onto the antifog coating precursor coating C a film of a surfactant-containing composition.

Said composition comprises at least one surfactant A, which is not particularly limited.

In one embodiment, the surfactant A is a compound of formula F(CF₂)_{y}-(CH₂-CH₂O)ₓ₊₁H (VIII), wherein x is an integer ranging from 1 to 14, y is an integer lower than or equal to 10. Preferably, compounds of formula (VIII), wherein y= 6, account for at least 90% by weight, preferably at least 95%, more preferably 100% by weight of compounds of formula (VIII) present in the composition, and x is preferably an integer ranging from 2 to 14. Examples of commercially available surfactants of formula (VIII) are Zonyl^{®} FSO 100 (from DuPont) or Capstone^{®} FS3100.

In another embodiment, the surfactant A has a sorbitan ring with n of its four hydroxyl groups functionalized with the same or different OH-terminated polyoxyalkylene groups, and p of its four hydroxyl groups functionalized with the same or different R¹ groups of formula:

-(R_{d}O)_{z}-(Y)ₙ₂-R'

in which R_{d} is an alkylene group, z is an integer ≥ 1, Y is a divalent group, n2 is 0 or 1 and R' is a saturated hydrocarbon group having from 12 to 19, preferably 13 to 19 carbon atoms, n and p being integers such that n = 2 or 3 and p = 1 or 2 with n + p = 4.

A preferred class of surfactants A comprises compounds of formula (IX): 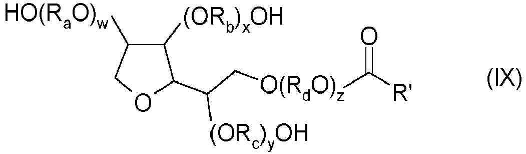 in which Rₐ, R_{b}, R_{c} and R_{d} independently represent linear or branched alkylene groups, preferably linear, preferably C2-C6 alkylene groups such as propylene or ethylene, more preferably ethylene, w, x, y and z independently represent integers ≥ 1, preferably ranging from 1 to 40, more preferably from 2 to 20, even more preferably from 2 to 10, and R' is such as defined previously. Preferably, w+x+y+z ranges from 4 to 40, more preferably from 8 to 30, even more preferably from 15 to 25. Ideally, w+x+y+z = 20. Such compounds are fully described in the application WO 2013/053406, in the name of the Applicant.

Surfactants A can be easily synthesized from relatively cheap raw materials, or are commercially available. In particular, surfactants A of formula IX are commercially available with relatively low price under the trade names Alkest^{™}, Canarcel^{™} or Tween^{™}, such as Tween^{™} 40, Tween^{™} 60 or Tween^{™} 80.

At least one surfactant A is generally applied on the surface of the antifog coating precursor coating in a manner such that a surfactant film is formed. Said film is preferably formed from a composition containing at least one surfactant A, preferably a surfactant liquid solution. Film formation does not involve formation of covalent bonds between surfactant A and the underlying layer, i.e., with the compounds bearing a polyoxyalkylene group present in the antifog coating precursor.

In the remainder of the specification, embodiments concerning a surfactant liquid solution will be described in more detail.

The surfactant solution provides the article, preferably an optical article such as a spectacle lens, with an antifog temporary protection by creating on its surface a uniform layer that contributes to disperse the water droplets on the surface of the optical article so that no visible fog is formed.

The surfactant solution is preferably applied by depositing at least one drop of this solution onto the surface of the antifog coating precursor and then by spreading it so as to cover preferably the whole precursor coating. A tissue or cloth impregnated by the surfactant-containing composition can be used to confer antifogging properties to the optical article coated with the precursor coating by wiping it with said cloth.

The surfactant-containing composition applied is generally an aqueous solution, comprising preferably from 0.5 to 15%, more preferably from 2 to 8% by weight of surfactants A, relative to the weight of the composition. The solution may also comprise alcohols, such as ethanol or isopropyl alcohol, in an amount generally of less than 10% by weight.

The surfactant solution reduces the static contact angle with water of the surface of the article. The antifog coating of the invention (i.e., coating C coated with said film of a surfactant-containing composition) preferably has a static contact angle with water lower than or equal to 10°, more preferably lower than or equal to 5°.

An immediately operational antifog coating is obtained as soon as the surfactant composition is applied on the antifog coating precursor. Thus, it is not necessary to apply many times a surfactant solution to obtain the antifogging effect, as is the case with products of the prior art.

In addition, the antifogging effect provided by the antifog coating is long-lasting over time, as demonstrated by fogging and defogging cycles tests.

The antifog coating is temporary but easily renewable, since it just has to be performed a new application of surfactant when there are not sufficient surfactant molecules adsorbed onto the surface of the antifog coating precursor anymore. The latter therefore remains "activable" in all circumstances.

The present invention also relates to a process for limiting the development of microbes and/or eliminating microbes on a main surface of a substrate, wherein:
- a compound B, which is an organosilane compound, is grafted on the surface of said substrate, the grafting of which forms a coating C on said substrate,
- compound B comprises a polyoxyalkylene group and at least one silicon atom bearing at least one hydrolyzable group.

The present invention also relates to the use of a compound B for simultaneously limiting the development of microbes and/or eliminating microbes on a main surface of a substrate and imparting antifog properties to said substrate. In this embodiment, the antimicrobial performance and antifog performance are achieved simultaneously in the same coating on the surface of the article, typically when coating C is further coated with a film of a surfactant-containing composition.

In a preferred embodiment, coating C is not coated with a film obtained by applying an antimicrobial composition, as it does not need such an additional antimicrobial composition to display antimicrobial properties. In particular, coating C is in one embodiment not coated with a composition comprising at least one surfactant, or a composition comprising a non ionic surfactant comprising a hydrophilic unit and a hydrophobic unit, said hydrophilic unit containing poly(oxyalkylene) units, or a composition comprising both an alcohol compound having a molecular weight equal or less than 500 g/mol and a non ionic surfactant comprising a hydrophilic unit and a hydrophobic unit, said hydrophilic unit containing poly(oxyalkylene) units.

In a preferred embodiment, the article according to the invention does not comprise any other antimicrobial agent than compound B, which is grafted on the surface of the substrate, under the form of a coating C.

In another embodiment, coating C does not comprise any other antimicrobial agent than compound B. For example, coating C does preferably not contain metal oxides, and/or metal fluorides, and/or metals and/or metal ions, or less than 1 % of metal oxides, and/or metal fluorides, and/or metals and/or metal ions, as compared to the total weight of coating C.

Non-limiting examples of antimicrobial agents excluded by the above embodiments include organic antimicrobial agents such as 2,4,4'-trichloro-2'-hydroxydiphenyl ether, ortho phenyl phenol, isothiazolone-based compounds such as 1,2-benzisothiazolin-3-one, N-butyl-1,2-benzisothiazolin-3-one, 2-octyl-isothiazolone, 4,5-dichloro-2-N-octyl-3(2H)-isothiazolone, methyl-3(2H)-isothiazolone or chloro-2-methyl-3(2H)-isothiazolone, diiodomethyl p-tolylsulfone, zinc and sodium pyrithiones, azoles such as propiconazoles, polyhexamethylene biguanide hydrochloride or 3,4,4'-trichlorocarbanilide; inorganic antimicrobial agents such as metal oxides or luorides, metals or metal ions, for example silver, copper, gold, aluminum, gallium, zinc or salts thereof or mixtures thereof, zinc oxide, magnesium oxide, MgF₂, silver oxide, copper oxide, titanium dioxide, calcium oxide, barium borate, tungsten oxides such as W₂O₃, WO₂, or WO₃.

The use of compound B according to the invention allows to prevent the proliferation of microbes (or microorganisms) on a main surface of a substrate, such as bacteria, without perturbing the optical properties of the article. This includes limiting the accumulation of microbes on a main surface of a substrate. In one embodiment, the microbes are not fungi.

Once coating C is formed on the surface of the substrate, said surface if protected from the development of microbes, which are either progressively eliminated following their deposition on the surface of coating C, at least partially and preferably totally or almost totally, or cannot further develop. As compared to the time they were deposited on the substrate coated with coating C, the microbes are either eliminated or their development is limited, and it can even be prevented. The elimination can be partial or total. As compared to the time the substrate coated with coating C was prepared, the development of microbes is limited or even prevented.

As used herein, eliminating microbes is intended to mean reducing the amount of microbes that are present on the substrate, in case it has been contaminated. The reduction can be partial or total. As used herein, when the substrate has been contaminated with microbes, limiting the development of microbes includes the case where no further development of microbes is possible.

As used herein, when the substrate is not contaminated with microbes (for example when it is brand new or has been carefully cleaned, e.g., with soap), limiting the development of microbes includes the case where no development of microbes is possible.

The resultant articles demonstrate an antimicrobial property, e.g., antibacterial activity, in standardized laboratory tests against various microbial strains, such as Staphylococcus aureus and Escherichia coli, without the need of depositing a surfactant film on coating C or to use antimicrobial agents such as metal oxides or fluorides, metals or metal ions. Indeed, the articles coated with a coating C showed a reduction in microbe load in the range of more than 99 % from the original concentration for both S. aureus and E. coli cultures (more than 2 log10 reduction) compared to articles devoid of coating C (reference), according to the standard ISO 22196.

Nevertheless, the antimicrobial activity of the articles can be enhanced through the activation of coating C with a surfactant, which can be applied by means of an adapted textile.

The antimicrobial coating C is the outermost coating present at the surface of the article, i.e., the most superficial coating. Such placement maximizes the probability that germs contacting the article will contact the antimicrobial coating layer.

The following examples illustrate the present invention in a more detailed, but non-limiting manner. Unless stated otherwise, all thicknesses disclosed in the present application relate to physical thicknesses. The percentages given in the tables are weight percentages. Unless otherwise specified, the refractive indexes referred to in the present invention are expressed at 20-25°C for a wavelength of 550 nm.

### EXAMPLES

### 1. General procedures

The articles employed in the examples comprised a 65 mm-diameter polycarbonate lens substrate (refractive index: 1.594), with no optical power and a thickness of 1.2 mm, coated on its convex main face with the impact resistant primer coating disclosed in the experimental part of WO 2010/109154 modified to have a refractive index of 1.6 by addition of high refractive index colloids, the abrasion- and scratch-resistant coating (hard coat) disclosed in example 3 of EP 0614957 (modified to have a refractive index of 1.6 rather than 1.5 by adding high refractive index colloids), and a four-layer commercial antireflective coating ZrO₂/SiO₂/ZrO₂/SiO₂ deposited by evaporation under vacuum.

An antifog coating precursor coating (coating C) was deposited onto the antireflective coating by evaporation under vacuum using a Joule effect-based heating source in the examples according to the invention as follows.

The siloxane compound of formula III CH₃O-(CH₂CH₂O)₆₋₉-(CH₂)₃Si(OCH₃)₃ was poured in a copper capsule (in the absence of any porous material), and this capsule was deposited onto a heating support in conductive tantalum. The evaporating device was a SATIS 1200 DLF or BALZERS BAK apparatus. The evaporation pressure of the siloxane compound of formula III generally varied from 5.10⁻⁶ to 8.10⁻⁶ mbar for SATIS 1200 DLF. Once the evaporation was completed, the surface of each lens was rinsed with some soapy water, optionally with isopropyl alcohol, then deionized water and wiped with a Cémoi^{™} dry cloth so that the excess of siloxane compound of formula III deposited was removed.

The Cémoi^{™} cloth is a cloth provided by the Facol supplier under the reference Microfibre M8405 30x40.

In comparative examples C1 and C2, no antifog coating precursor (coating C) was deposited onto the lenses.

### 2. Antimicrobial activity assay

The methodology used to determine the antimicrobial activity was made according to the ISO 22196:2011 standard. The ISO 22196 method is designed to quantitatively test the ability of plastic surfaces to inhibit the growth of microorganisms or kill them, over a 24-hour period of contact. It is an excellent way to quantify the antimicrobial activity of a surface. Among the various tests for antimicrobial activity of surfaces, this has emerged as one of the industry standards. The tests were performed with a certified microbiology lab.

Firstly, the lenses were cleaned with isopropyl alcohol and dried with a CEMOI cloth.

A suspension of microorganisms of a concentration of 10⁵ CFU (colony-forming unit) was brought in contact with the surface of a lens. To ensure adequate inoculation conditions, a polycarbonate membrane pas placed on the bacteria suspension to ensure contact of the suspension with the lens surface.

The amount of microorganisms on the surface of the tested lens after a 24 hours contact time at 22°C +/-2°C was compared to the amount of microorganisms on the surface of a reference lens treated under the same conditions (CFU numeration). Two different bacteria were investigated; Staphylococcus aureus ATCC 9144 and Escherichia coli CIP 54127. Concretely, the suspension of microorganisms was recovered after the 24 hours contact time by pipetting directly onto the lens.

The culture of bacteria was performed by incorporation in non-selective agar medium.

### 3. Results

For each configuration and each bacteria, the tests were performed on a series of 6 lenses and average values are given in the table below. Log10 reduction is a measure of how thoroughly the antimicrobial coating reduces the concentration of a given contaminant. It is defined as the common logarithm of the ratio of the levels of microbes before and after the process, so an increment of 1 corresponds to a reduction in concentration by a factor of 10. In general, an n-log reduction means that the concentration of remaining contaminants is only 10⁻ⁿ times that of the original. For example, a 0-log reduction is no reduction at all, while a 1-log reduction corresponds to a reduction of 90 percent from the original concentration, and a 2-log reduction corresponds to a reduction of 99 percent from the original concentration.

Various configurations of lenses have been tested to ensure the reliability of the results: no optical power, negative optical power, positive optical power, concave and convex sides, stock and prescription lenses, several batches of lenses.

| | Example C1 (comp.) | Example 1 | Example C2 (comp.) | Example 2 | Example 3 |
|---|---|---|---|---|---|
| Coating C | No | Yes | No | Yes | Yes |
| log10 reduction | -2.47 | -4.91 | -1.41 | -3.47 | -4.47 |
| log10 reduction as compared to reference sample | 0 | -2.44 | 0 | -2.06 | -3.06 |
| Microbe | Staphylococcus aureus | Staphylococcus aureus | E. coli | E. coli | E. coli |
| Applied surfactant | No | No | No | No | Yes |

The lenses of example 1 provide 2.44 log10 reduction for staphylococcus aureus versus the reference lens devoid of coating C according to the invention (comparative example 1), while the lenses of example 2 provide 2.06 log10 reduction for E. coli versus the reference lens devoid of coating C according to the invention (comparative example 2).

It was also observed that depositing a surfactant containing film onto coating C (antifog coating precursor coating) by means of a wipe (polyester/polyamide tissue) from the CMA company (thus forming an antifog coating) enhances the antibacterial activity by 1 log10 as compared to lenses with coating C but without any surfactant containing film (example 3). In these tests, the surfactant was CAPSTONE^{®} FS3100. It was applied such as disclosed in the application WO 2013/013929, in the name of the Applicant. The final article achieved removal of more than 99.9% of microbes (>3 log10 reduction for E. coli and staphylococcus aureus) compared to the reference article.

## Claims

1. The use of a compound B for limiting the development of microbes and/or eliminating microbes on a main surface of a substrate, wherein:
- compound B is an organosilane compound grafted on the surface of said substrate, the grafting of which forms a coating C on said substrate,
- compound B comprises a polyoxyalkylene group and at least one silicon atom bearing at least one hydrolyzable group.

2. The use according to claim 1, wherein said polyoxyalkylene group of compound B comprises less than 80 carbon atoms, preferably less than 40 carbon atoms, more preferably from 5 to 20 carbon atoms.

3. The use according to any one of the preceding claims, wherein said coating C is further coated with a film of a surfactant-containing composition.

4. The use according to claim 3, wherein said coating C coated with said film of a surfactant-containing composition exhibits a static contact angle with water lower than or equal to 10°, more preferably lower than or equal to 5°.

5. The use according to claim 3 or 4, wherein the surfactant-containing composition comprises from 0.5 to 15%, preferably from 2 to 8% by weight of surfactants, relative to the weight of said composition.

6. The use according to any one of claims 3 to 5, wherein said surfactant-containing composition contains at least one surfactant A of formula F(CF₂)_{y}-(CH₂-CH₂O)ₓ₊₁H (VIII), wherein x is an integer ranging from 1 to 14, y is an integer lower than or equal to 10, or at least one surfactant A having a sorbitan ring with n of its four hydroxyl groups functionalized with the same or different OH-terminated polyoxyalkylene groups, and p of its four hydroxyl groups functionalized with the same or different R¹ groups of formula:
-(R_{d}O)_{z}-(Y)ₙ₂-R'
in which R_{d} is an alkylene group, z is an integer ≥ 1, Y is a divalent group, n2 is 0 or 1 and R' is a saturated hydrocarbon group having from 12 to 19, preferably 13 to 19 carbon atoms, n and p being integers such that n = 2 or 3 and p = 1 or 2 with n + p = 4.

7. The use according to any one of the preceding claims, wherein said main surface of the substrate comprises a first coating onto which said compound B is directly grafted.

8. The use according to claim 7, wherein said first coating has an outer surface bearing silanol groups.

9. The use according to claim 7 or 8, wherein said first coating is an interferential coating, preferably an antireflection coating, an abrasion-resistant and/or scratch-resistant coating or a silica-based layer deposited onto an abrasion-resistant and/or scratch-resistant coating.

10. The use according to any one of the preceding claims, wherein said coating C has a thickness lower than or equal to 5 nm.

11. The use according to any one of the preceding claims, wherein said coating C has a static contact angle with water of more than 10° and of less than 50°.

12. The use according to any one of the preceding claims, wherein said compound B is a compound of formula:
R¹¹Y'ₘSi(X)₃₋ₘ (I)
in which the Y' groups, being the same or different, are monovalent organic groups bound to the silicon through a carbon atom, the X groups, being the same or different, are hydrolyzable groups, R¹¹ is a group comprising a polyoxyalkylene group, and m is an integer equal to 0, 1 or 2.

13. The use according to any one of the preceding claims, wherein said substrate is the substrate of an optical lens, preferably an ophthalmic lens.

14. The use according to any one of the preceding claims, wherein the microbes are bacteria.

## Patentansprüche

1. Verwendung einer Verbindung B zum Beschränken der Entwicklung von Mikroben und/oder Beseitigen von Mikroben auf einer Hauptoberfläche eines Substrats, wobei:
- Verbindung B eine Organosilanverbindung ist, die auf die Oberfläche des Substrats gepfropft ist, wobei das Pfropfen davon eine Beschichtung C auf dem Substrat bildet,
- Verbindung B eine Polyoxyalkylengruppe und wenigstens ein Siliciumatom, das wenigstens eine hydrolysierbare Gruppe trägt, umfasst.

2. Verwendung gemäß Anspruch 1, wobei die Polyoxyalkylengruppe von Verbindung B weniger als 80 Kohlenstoffatome umfasst, vorzugsweise weniger als 40 Kohlenstoffatome, bevorzugter von 5 bis 20 Kohlenstoffatome.

3. Verwendung gemäß einem der vorstehenden Ansprüche, wobei die Beschichtung C ferner mit einem Film einer tensidhaltigen Zusammensetzung beschichtet ist.

4. Verwendung gemäß Anspruch 3, wobei die Beschichtung C, die mit dem Film einer tensidhaltigen Zusammensetzung beschichtet ist, einen statischen Kontaktwinkel mit Wasser von kleiner als oder gleich 10°, bevorzugter kleiner als oder gleich 5°, zeigt.

5. Verwendung gemäß Anspruch 3 oder 4, wobei die tensidhaltige Zusammensetzung von 0,5 bis 15 Gew.-%, vorzugsweise von 2 bis 8 Gew.-%, an Tensiden, bezogen auf das Gewicht der Zusammensetzung, umfasst.

6. Verwendung gemäß einem der Ansprüche 3 bis 5, wobei die tensidhaltige Zusammensetzung wenigstens ein Tensid A der Formel F(CF₂)_{y}-(CH₂CH₂O)ₓ₊₁H (VIII) enthält, wobei x eine ganze Zahl in dem Bereich von 1 bis 14 ist, y eine ganze Zahl kleiner als oder gleich 10 ist, oder wenigstens ein Tensid A einen Sorbitanring aufweist, bei dem n seiner vier Hydroxygruppen mit gleichen oder verschiedenen OH-terminierten Polyoxyalkylengruppen substituiert sind und p seiner vier Hydroxygruppen mit gleichen oder verschiedenen R¹-Gruppen der Formel:
- (R_{d}O)₂-(Y)ₙ₂-R'
funktionalisiert sind, wobei R_{d} eine Alkylengruppe ist, z eine ganze Zahl ≥ 1 ist, Y eine zweiwertige Gruppe ist, n2 0 oder 1 ist und R' eine gesättigte Kohlenwasserstoffgruppe mit von 12 bis 19, vorzugsweise 13 bis 19, Kohlenstoffatomen ist, n und p ganze Zahlen sind, wobei n = 2 oder 3 und p = 1 oder 2 mit n + p = 4.

7. Verwendung gemäß einem der vorstehenden Ansprüche, wobei die Hauptoberfläche des Substrats eine erste Beschichtung umfasst, auf die die Verbindung B direkt gepfropft ist.

8. Verwendung gemäß Anspruch 7, wobei die erste Beschichtung eine Außenoberfläche aufweist, die Silanolgruppen trägt.

9. Verwendung gemäß Anspruch 7 oder 8, wobei die erste Beschichtung eine Interferenzbeschichtung ist, vorzugsweise eine Antireflexbeschichtung, eine abriebfeste und/oder kratzfeste Beschichtung oder eine Beschichtung auf Siliciumdioxidbasis, die auf eine abriebfeste und/oder kratzfeste Beschichtung aufgebracht ist.

10. Verwendung gemäß einem der vorstehenden Ansprüche, wobei die Beschichtung C eine Dicke von kleiner als oder gleich 5 nm aufweist.

11. Verwendung gemäß einem der vorstehenden Ansprüche, wobei die Beschichtung C einen statischen Kontaktwinkel mit Wasser von größer als 10° und kleiner als 50° aufweist.

12. Verwendung gemäß einem der vorstehenden Ansprüche, wobei die Verbindung B eine Verbindung der Formel:
R¹¹Y'ₘSi(X)₃₋ₘ (I)
ist, wobei die Y'-Gruppen, die gleich oder verschieden sind, einwertige organische Gruppen sind, die durch ein Kohlenstoffatom an das Silicium gebunden sind, die X-Gruppen, die gleich oder verschieden sind, hydrolysierbare Gruppen sind, R¹¹ eine Gruppe ist, die eine Polyoxyalkylengruppe umfasst, und m eine ganze Zahl gleich 0, 1 oder 2 ist.

13. Verwendung gemäß einem der vorstehenden Ansprüche, wobei das Substrat das Substrat einer optischen Linse, vorzugsweise einer ophthalmischen Linse, ist.

14. Verwendung gemäß einem der vorstehenden Ansprüche, wobei die Mikroben Bakterien sind.

## Revendications

1. Utilisation d'un composé B pour limiter le développement de microbes et/ou éliminer les microbes sur une surface principale d'un substrat, dans laquelle :
- le composé B est un composé organosilane greffé sur la surface dudit substrat, dont le greffage forme un revêtement C sur ledit substrat,
- le composé B comprend un groupe polyoxyalkylène et au moins un atome de silicium portant au moins un groupe hydrolysable.

2. Utilisation selon la revendication 1, dans laquelle ledit groupe polyoxyalkylène du composé B comprend moins de 80 atomes de carbone, de préférence moins de 40 atomes de carbone, plus préférablement de 5 à 20 atomes de carbone.

3. Utilisation selon l'une quelconque des revendications précédentes, dans laquelle ledit revêtement C est en outre revêtue avec un film d'une composition contenant un tensioactif.

4. Utilisation selon la revendication 3, dans laquelle ledit revêtement C revêtu avec ledit film d'une composition contenant un tensioactif présente un angle de contact statique avec l'eau inférieur ou égal à 10°, plus préférablement inférieur ou égal à 5°.

5. Utilisation selon la revendication 3 ou 4, dans laquelle la composition contenant un tensioactif comprend de 0,5 à 15 %, de préférence de 2 à 8 % en poids de tensioactifs, par rapport au poids de ladite composition.

6. Utilisation selon l'une quelconque des revendications 3 à 5, dans laquelle ladite composition contenant un tensioactif contient au moins un tensioactif A de formule F(CF₂)_{y}-(CH₂-CH₂O)ₓ₊₁H (VIII), dans laquelle x est un entier dans la plage de 1 à 14, y est un entier inférieur ou égal à 10, ou au moins un tensioactif A ayant un cycle sorbitane avec n de ses quatre groupes fonctionnalisés avec des groupes polyoxyalkylène à terminaison OH identiques ou différents, et p de ses quatre groupes hydroxyle fonctionnalisés avec les groupes R¹ identiques ou différents de formule :
-(R_{d}O)_{z}-(Y)ₙ₂-R'
dans laquelle R_{d} est un groupe alkylène, z est un entier ≥ 1, Y est un groupe divalent, n2 est 0 ou 1 et R' est un groupe hydrocarboné saturé ayant de 12 à 19, de préférence 13 à 19 atomes de carbone, n et p étant des entiers tels que n = 2 ou 3 et p = 1 ou 2 avec n + p = 4 .

7. Utilisation selon l'une quelconque des revendications précédentes, dans laquelle lesdites surfaces principales du substrat comprennent un premier revêtement sur lequel ledit composé B est directement greffé.

8. Utilisation selon la revendication 7, dans laquelle ledit premier revêtement comporte une surface externe portant des groupes silanol.

9. Utilisation selon la revendication 7 ou 8, dans laquelle ledit premier revêtement est un revêtement interférentiel, de préférence un revêtement antireflet, un revêtement résistant à l'abrasion et/ou résistant aux rayures ou une couche à base de silice déposée sur un revêtement résistant à l'abrasion et/ou résistant aux rayures.

10. Utilisation selon l'une quelconque des revendications précédentes, dans laquelle ledit revêtement C a une épaisseur inférieure ou égale à 5 nm.

11. Utilisation selon l'une quelconque des revendications précédentes, dans laquelle ledit revêtement C présente un angle de contact statique avec l'eau supérieur à 10° et inférieur à 50°.

12. Utilisation selon l'une quelconque des revendications précédentes, dans laquelle ledit composé B est un composé de formule :
R¹¹ Y'ₘSi(X)₃₋ₘ (I)
dans laquelle les groupes Y', étant identiques ou différents, sont des groupes organiques monovalents liés au silicium par l'intermédiaire d'un atome de carbone, les groupes X, étant identiques ou différents, sont des groupes hydrolysables, R¹¹ est un groupe comprenant un groupe polyoxyalkylène, et m est un entier égal à 0, 1 ou 2.

13. Utilisation selon l'une quelconque des revendications précédentes, dans laquelle ledit substrat est le substrat d'une lentille optique, de préférence une lentille ophtalmique.

14. Utilisation selon l'une quelconque des revendications précédentes, dans laquelle les microbes sont des bactéries.
